# NEW EUROPEAN PATENT SPECIFICATION

(11) **EP 3 170 404 B2**
(45) Date of publication and mention of the opposition decision: **08.06.2022**
(45) Mention of the grant of the patent: 17.04.2019
(21) Application number: 16156022.2
(22) Date of filing: 16.02.2016
(51) Int. Cl.: A23L 3/36, A23L 3/375, A23B 4/06, A23B 4/09, F25D 3/10, F25D 13/06, F25D 29/00, G01B 11/24

(54) **CRYOGENIC FREEZING METHOD AND APPARATUS**
VERFAHREN UND VORRICHTUNG ZUR KRYOGENEN FROSTUNG
PROCÉDÉ ET APPAREIL DE CONGÉLATION CRYOGÉNIQUE

(30) Priority: 17.11.2015 US 201562256185 P; 02.02.2016 US 201615012883
(43) Date of publication of application: 24.05.2017
(73) Proprietor: Linde GmbH, 82049 Pullach (DE)
(72) Inventor: NEWMAN, Michael D., Hillsborough, NJ New Jersey 08844 (US); McCORMICK, Stephen A., Warrington, PA Pennsylvania 18976 (US)
(74) Representative: Hofmann, Andreas

(56) References cited:
- EP-A1- 1 108 998
- CA-A1- 2 297 879
- US-A- 5 664 485
- US-A1- 2006 070 393
- US-A1- 2007 119 192
- US-A1- 2011 265 492

## Description

### Technical field of the present invention

The present invention relates to a cryogenic freezing method and apparatus, in particular to a cryogenic food freezing method and apparatus.

### Technological background of the present invention

All known cryogenic food freezing systems (cf. for example US 2011/0265492 A1, US 5,664,485, EP 1 108 998 A1, US 2007/0119192 A1, US 2006/0070393 A1 or CA 2 297 879 A1) require trained personnel to operate the systems to accordingly adjust the freezing conditions of same. Production rates within a food freezing system processing line are continually changing, i. e. inlet temperatures and hence heat load of products to be chilled/frozen by the system change, as do conditions in the processing facility which may impact the chilling/freezing of the food products.

If the food freezing system is not controlled and adjusted to properly compensate for changing inlet and external conditions of the freezing system, the overall operating efficiency of the system will be impacted such that the system is used inefficiently, product such as food product is chilled or frozen inefficiently and ineffectively, and the cryogenic substance for chilling and/or freezing is unnecessarily wasted.

In order to control and adjust such a system, it is typical for operators not to make immediate adjustments to compensate for food production line variability, because of the labour intensity to do so and the fact that very often such operators are not aware of the variable changes that occur along the processing line of the food freezer.

### Disclosure of the present invention: object, solution, advantages

Starting from the disadvantages and shortcomings as described above as well as taking the prior art as discussed into account, an object of the present invention is to overcome the limitations and problems that earlier methods and apparatus have experienced.

This object is accomplished by an apparatus comprising the features of claim 1 as well as by a method comprising the features of claim 5. Advantageous embodiments and expedient improvements of the present invention are disclosed in the respective dependent claims.

The present invention basically provides for a self-adjusting cryogenic freezing method and system, in particular for a self-adjusting cryogenic food freezing method and system; in particular, the method and the system according to the present invention automatically adjust an atmosphere, conveyor belt speed, blower speed, exhaust speed [extraction rate(s)] and freezer temperature(s) of a freezer.

There is therefore provided a method for freezing a product, in particular a food product, in a cryogenic freezer which includes sensing at least one physical characteristic of the product in real time; providing a cryogenic substance to the product for heat transfer at said product; automatically self-adjusting the heat transfer at the product responsive to the sensing the at least one physical characteristic; and continuously self-adjusting the heat transfer for bringing the product to a select temperature.

According to an advantageous embodiment of the present invention, the sensing may comprise all physical characteristics of the product, and a temperature of an atmosphere in the cryogenic freezer to which the product is exposed.

With the sensing expediently comprising further sensing of the product at an inlet and an outlet of the cryogenic freezer, both incoming and outgoing product conditions and production rates may be actively monitored in real time.

In a favoured embodiment of the present invention, the sensing may comprise further sensing an atmosphere and circulation assembly in the cryogenic freezer for the continuously self-adjusting of the heat transfer. Conditions within the cryogenic freezer may also be monitored in real time, optionally including monitoring the oxygen content in the cryogenic freezer.

According to a preferred embodiment of the present invention, the sensing may comprise scanning the product with a laser at an inlet of said cryogenic freezer, in order to precisely record the continuous cross-section area of the product entering the freezer at the inlet.

Independently thereof or in combination therewith, a temperature of the product is sensed with an infrared temperature sensor at an inlet and an outlet of the cryogenic freezer.

The self-adjusting of the cryogenic freezing method and system according to the present invention may be advantageously implemented in such way that the heat transfer may depend upon the scanning and the further sensing.

In an expedient embodiment of the present invention, the sensing may comprise further sensing at least one of conveying the product through the cryogenic freezer, and the providing the cryogenic substance, for the continuously self-adjusting said heat transfer.

There is also provided a related cryogenic freezer for a product, in particular for a food product, which includes a housing having an internal chamber and a cryogen delivery member disposed therein; a conveyor for conveying the product through the internal chamber; a laser scanner disposed at an inlet of the housing for scanning a cross-sectional area of the product entering the cryogenic freezer; a pair of infrared (IR) temperature sensors, wherein a first IR sensor is disposed downstream of the laser scanner and upstream of an inlet to said internal chamber, and a second IR sensor is disposed downstream of an outlet of said internal chamber; and a controller interconnecting the conveyor, the laser scanner, and the pair of IR temperature sensors for automatically self-adjusting heat transfer of the product in the internal chamber.

According to the present invention, an oxygen (O₂) sensor is provided to sense the oxygen content of the internal space or chamber; in particular, the oxygen (O₂) sensor may be used to determine if air is being drawn into the freezing process from external to the housing.

In a preferred embodiment of the present invention, at least one temperature sensor, especially at least one infrared (IR) temperature sensor, may be mounted for sensing a temperature of the internal space or chamber. The sensor may be for example a resistance temperature detector (RTD), which is more accurate at lower temperatures than a thermocouple.

A delivery member, in particular a pipe, for example a cryogen pipe, for introducing the cryogenic substance via a cryogen inlet may be operatively associated with a valve, in particular a control valve, for example a modulating control valve, said valve constructed and arranged to control or restrict the amount of cryogenic substance introduced through the delivery member into the internal space or chamber.

The present invention may be for example implemented in the form of a tunnel freezer.

### Brief description of the drawings

For a more complete understanding of the present embodiment disclosures and as already discussed above, there are several options to embody as well as to improve the teaching of the present invention in an advantageous manner. To this aim, reference may be made to the claims dependent on claim 1 as well as on claim 5; further improvements, features and advantages of the present invention are explained below in more detail with reference to a particular and preferred embodiment by way of non-limiting example and to the appended drawing figure(s) taken in conjunction with the following description of the exemplary embodiment, of which:
- Fig. 1: shows a side plan view in cross-section of an example of a self-adjusting cryogenic food freezer, said example to be used with for example food products, and said example not being part of the claimed invention; and
- Fig. 2: shows a side plan view in cross-section of an embodiment of a self-adjusting cryogenic food freezer according to the present invention, said embodiment working according to the method of the present invention and to be used with for example food products.

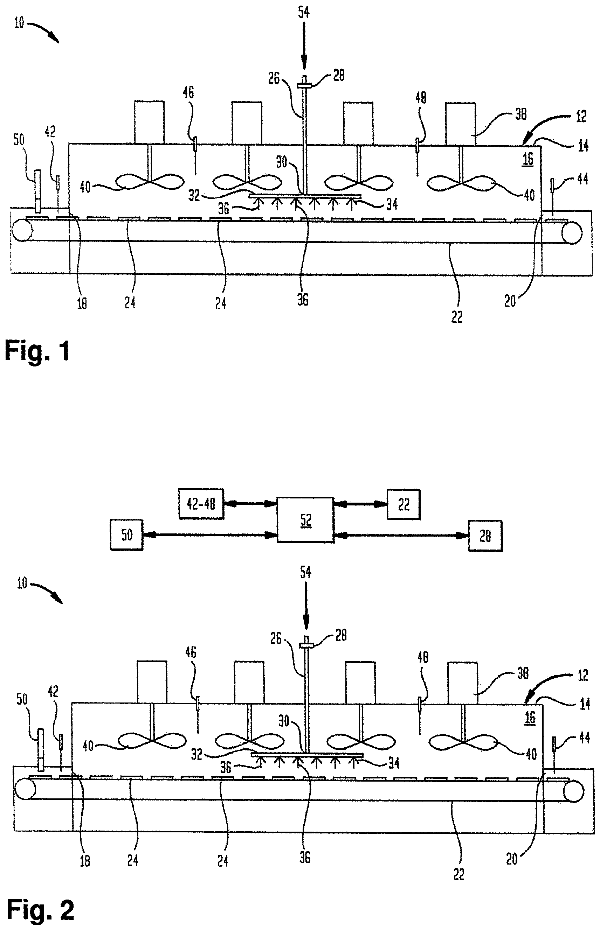

In the appended drawing figures, like equipment is labelled with the same reference numerals throughout the description of Fig. 1 and Fig. 2.

### Detailed description of the drawings; best way of embodying the present invention

Before explaining the inventive embodiments in detail, it is to be understood that the present invention is not limited in its application to the details of construction and arrangement of parts illustrated in the accompanying drawings, since the present invention is capable of other embodiments and being practiced or carried out in various ways. Also, it is to be understood that the phraseology or terminology employed herein is for the purpose of description and not of limitation.

In the following description, terms such a horizontal, upright, vertical, above, below, beneath and the like, are used solely for the purpose of clarity illustrating the present invention and should not be taken as words of limitation. The drawing is for the purpose of illustrating the present invention and is not intended to be to scale.

In order to avoid unnecessary repetitions and unless otherwise stated, the above-mentioned as well as the below-mentioned explanations regarding the features, characteristics and advantages relate
- to the apparatus according to Fig. 1 as well as
- to the apparatus embodiment according to Fig. 2 of the present invention.

Basically, the system of Fig. 1 and the system embodiment of Fig. 2 as well as described herein will actively monitor in real time both incoming and outgoing food product conditions and production rates. Conditions within the cryogenic food freezer are also monitored in real time.

Use of an intelligent control philosophy for the present cryogenic food freezing system can automatically be adjusted and adapted to optimum efficiencies with a variety of process inputs to the system.

The end result is a more efficient freezing solution along with additional data which can be fed to both upstream and downstream processes for a more effective control and uniformity of a food chilling or freezing process for the food product, and efficient use of the cryogenic substance for chilling and/or freezing of same.

A cryogenic food freezing system is one of many components arranged along a food processing line. The customers of such food freezing systems are concerned with the commercial value drivers, such as maximum product yield, improving process efficiency (such as reduced downtime of the system), and a reduction in the overall processing costs to use the system.

In view of the foregoing, there is provided a self-adjusting cryogenic food freezing apparatus 10 or apparatus for use in a food processing line in which products, such as any type of food product, are chilled or frozen for continuous or batch freezing applications.

The apparatus 10 includes a housing 12 comprising a plurality of sidewalls 14 for defining an internal space 16 or chamber therein. One of the sidewalls 14 is provided with an inlet 18, while another one of the sidewalls 14, usually positioned at an opposite end of the housing 12, includes an outlet 20.

The inlet 18 and the outlet 20 provide for communication with respect to the chamber 16 and through which moves a transport assembly 22 or conveyor belt for conveying food product 24 from the inlet 18 through the chamber 16 to the outlet 20. The conveyor belt 22 can be of any know type of construction, such as for example a stainless steel mesh belt.

Cryogen is introduced via a cryogen inlet 54 through a pipe 26, the cryogen pipe, into the chamber 16. The pipe 26 includes a valve 28 such as a modulating control valve, to control or restrict the amount of cryogen being introduced into the chamber 16 of the apparatus 10.

The cryogen pipe 26 is in fluid communication with a remote source (not shown) of cryogen(ic substance) which can be selected for example from the group consisting of nitrogen (N₂), liquid nitrogen (LIN), carbon dioxide (CO₂) snow, or a combination thereof.

An end 30 of the pipe 26 in the chamber 16 is branched or split into a plurality of sections 32 or portions to provide a spray bar which operates as a distribution arm or manifold for the cryogen being provided from the pipe 26.

The sections 32 may also be provided with at least one and for most applications a plurality of nozzles 34 which distribute or jet a spray 36 of the cryogen onto the food product 24 passing proximate thereto on the conveyor belt 22. The cryogen spray 36 is usually in the form of LIN or solid carbon dioxide (CO₂) snow for providing a thorough heat transfer effect of the underlying food product 24 passing beneath the nozzles 34.

The housing 12 is also provided with at least one and for most applications a plurality of motors 38, each one of which is connected to and drives a corresponding fan 40 for circulating the disbursed cryogenic spray and cold cryogenic gas 36 within the chamber 16, and to maintain atmosphere in the chamber to a substantially uniform temperature, although depending upon the cryogen process being used the atmosphere could be isothermal, co-current (temperature profiles in the same direction within the freezer atmosphere) or counter-current (temperature profiles in opposite or dissimilar directions within the freezer atmosphere).

Movement of the fans 40 provides for distributing the cryogenic spray 36 across the chamber 16 so that food product 24 entering at the inlet 18 begins to be subjected to heat transfer and therefore chilling and/or freezing before reaching the portions 32 of the spray bar. The motor 38 is mounted external to the housing 12 so that heat from the motor(s) 38 has minimal effect on the atmosphere in the chamber 16.

An array of sensors can be placed at the inlet 18, the outlet 20, and the chamber 16 to collect information about the chamber atmosphere and the status of the food products 24 as same are introduced into, subjected to, and depart from the chilling and/or freezing process of the apparatus 10. In particular, an infrared (IR) temperature sensor 42 can be mounted for actuation at the inlet 18, while another IR temperature sensor 44 is mounted at the outlet 20.

At least one other temperature sensor 46 can be mounted for sensing a temperature of the chamber 16. The sensor 46 may be for example a resistance temperature detector (RTD), which is more accurate at lower temperatures than a thermocouple.

An oxygen (O₂) sensor 48 is also provided to sense the oxygen content of the chamber 16. The O₂ sensor 48 is used to determine if air is being drawn into the freezing process from external to the housing 12.

A laser scanner 50 is mounted proximate the inlet 18 upstream of the IR temperature sensor 42, and which precisely records the continuous cross-section area of the food product 24 entering the freezer at the inlet 18.

In the embodiment according to Fig. 2, a controller 52 processes real time data from the sensors 42, 44, 46, 48 (collectively 42 to 48); the controller 52 interconnecting the sensors 42 to 48, the operation of the conveyor belt 22, the laser scanner 50, and the valve 28 in such a way so as to allow the freezer apparatus 10, without the necessity of an operator, to automatically control and optimize food freezing with the apparatus 10.

Data collected from the sensors 42 to 48, including the laser scanner 50, can also provide feedback to the plant operator to permit more precise oversight and control of other processes positioned upstream and downstream of the present apparatus 10.

Still referring to Fig. 1 and to Fig. 2, the laser scanner 50 provides data which can be used to calculate mass flow rates and loading of the food product 24 on the conveyor belt 22. The IR temperature sensor 42 at the inlet 18 will sense and monitor the food product temperature at the inlet with known thermal properties of the food product 24, i. e. the two data points described above: the cross-sectional area of the product 24 entering the freezer and the mass flow rates and loading of the product on the conveyor belt 22, such can be used to calculate real time production rate and therefore heat load of the food product entering the process provided by the apparatus 10.

Accordingly, a speed of the conveyor belt 22 and the injection rates of the cryogen introduced by the pipe 26 into the chamber 16 can be adjusted in real time or "on the fly" to match food product heat load and maximum belt loading of the food product to provide a higher operating efficiency of heat transfer at the food product in the apparatus 10. The IR temperature sensor 44 located at the outlet 20 of the apparatus 10 is used to check heat removal from the product which has occurred from the process of the present embodiment.

Accordingly, depending upon the heat removal that has occurred, delivery of the cryogen spray 36, speed of the fans 40, and speed of the conveyor belt 22 can be adjusted automatically to compensate for any inefficiencies or discrepancies in chilling and/or freezing the food product 24.

The freezer apparatus 10 and related process of the embodiments provide for an increase in processing efficiencies for the food product through the freezer apparatus and accordingly, a substantial reduction in manual labour necessary to "tune" the apparatus for the food product 24 being processed (chilled or frozen) in the apparatus.

It will be understood that the embodiments described herein are merely exemplary, and that one skilled in the art may make variations and modifications without departing from the spirit and scope of the present invention. All such variations and modifications are intended to be included within the scope of the present invention as described and claimed herein. Further, all embodiments disclosed are not necessarily in the alternative, as various embodiments of the present invention may be combined to provide the desired result.

### List of reference numerals

- 10: apparatus, in particular cryogenic freezer apparatus
- 12: housing of apparatus 10
- 14: sidewall of housing 12
- 16: chamber or internal space
- 18: inlet
- 20: outlet
- 22: transport assembly, in particular conveyor, for example conveyor belt, such as stainless steel mesh belt
- 24: product, in particular food product
- 26: delivery member, in particular pipe, for example cryogen pipe
- 28: valve, in particular control valve, for example modulating control valve, of pipe 26
- 30: end of pipe 26 in chamber or internal space 16
- 32: portion or section of spray bar
- 34: nozzle
- 36: cryogenic substance, in particular cryogenic spray
- 38: motor
- 40: fan
- 42: infrared (IR) temperature sensor, mounted at inlet 18
- 44: infrared (IR) temperature sensor, mounted at outlet 20
- 46: sensor, in particular resistance temperature detector (RTD), mounted at chamber or internal space 16
- 48: oxygen (O₂) sensor
- 50: laser scanner
- 52: controller (cf. second embodiment according to Fig. 2)
- 54: cryogen inlet

## Claims

1. A cryogenic freezer (10) for a product (24), in particular for a food product, comprising:
- a housing (12) having an internal chamber (16) and a cryogen delivery member (26) disposed therein;
- a conveyor (22) for conveying the product (24) through the internal chamber (16);
- a laser scanner (50) disposed at an inlet (18) of the housing (12) for scanning a cross-sectional area of the product (24) entering the cryogenic freezer (10);
- a pair of infrared (IR) temperature sensors (42, 44), wherein a first IR sensor (42) is disposed downstream of the laser scanner (50) and upstream of an inlet (18) to said internal chamber (16), and a second IR sensor (44) is disposed downstream of an outlet (20) of said internal chamber (16);
- an oxygen sensor (48) mounted for sensing oxygen content in the internal chamber (16); and
- a controller (52) interconnecting the conveyor (22), the laser scanner (50), and the pair of IR temperature sensors (42, 44) for automatically self-adjusting heat transfer of the product (24) in the internal chamber (16).

2. The freezer according to claim 1, further comprising a temperature sensor (46) mounted for sensing a temperature of the internal chamber (16).

3. The freezer according to claim 1 or 2, further comprising a valve (28), in particular a control valve, operatively associated with the cryogen delivery member (26).

4. The freezer according to claim 3, wherein the valve (28) is constructed and arranged to control or restrict an amount of cryogen substance (36) introduced through the cryogen delivery member (26) into the internal chamber (16).

5. A method for freezing a product (24) in a cryogenic freezer (10) according to at least one of claims 1 to 4, comprising:
- sensing (42, 44, 46, 48, 50) at least one physical characteristic of the product (24) in real time;
- providing a cryogenic substance (36) to the product (24) for heat transfer at said product (24);
- automatically self-adjusting the heat transfer at the product (24) responsive to the sensing (42, 44, 46, 48, 50) the at least one physical characteristic; and
- continuously self-adjusting the heat transfer for bringing the product (24) to a select temperature.

6. The method according to claim 5, wherein the sensing (42, 44, 46, 48, 50) comprises all physical characteristics of the product (24), and a temperature of an atmosphere in the cryogenic freezer (10) to which the product (24) is exposed.

7. The method according to claim 5 or 6, wherein the sensing (42, 44, 46, 48, 50) comprises further sensing of the product (24) at an inlet (18) and an outlet (20) of the cryogenic freezer (10).

8. The method according to at least one of claims 5 to 7, wherein the sensing (42, 44, 46, 48, 50) comprises further sensing an atmosphere and circulation assembly in the cryogenic freezer (10) for the continuously self-adjusting of the heat transfer.

9. The method according to at least one of claims 5 to 8, wherein the sensing (42, 44, 46, 48, 50) comprises scanning (50) the product (24) with a laser at an inlet (18) of said cryogenic freezer (10), and further sensing a temperature of the product (24) with an infrared temperature sensor (42, 44) at an inlet (18) and an outlet (20) of the cryogenic freezer (10).

10. The method according to claim 9, further comprising further self-adjusting the heat transfer depending upon the scanning (50) and the further sensing.

11. The method according to at least one of claims 5 to 10, further comprising monitoring oxygen content in the cryogenic freezer (10).

12. The method according to at least one of claims 5 to 11, wherein the cryogenic substance (36) is selected from the group consisting of nitrogen, liquid nitrogen, carbon dioxide snow, and a combination thereof.

13. The method according to at least one of claims 5 to 12, further comprising further sensing at least one of conveying (22) the product (24) through the cryogenic freezer (10), and the providing the cryogenic substance (36), for the continuously self-adjusting said heat transfer.

14. The method according to at least one of claims 5 to 13, wherein the product (24) is at least one food product.

## Patentansprüche

1. Kryogene Gefriereinrichtung (10) für ein Produkt (24), insbesondere für ein Nahrungsmittelprodukt, die Folgendes umfasst:
- ein Gehäuse (12) mit einer internen Kammer (16) und einem darin angeordneten kryogenen Zufuhrelement (26);
- einen Förderer (22) zum Befördern des Produkts (24) durch die interne Kammer (16);
- einen Laserscanner (50), angeordnet an einem Einlass (18) des Gehäuses (12) zum Scannen einer Querschnittsfläche des Produkts (24), das in die kryogene Gefriereinrichtung (10) eintritt;
- ein Paar Infrarot-Temperatursensoren (IR) (42, 44), wobei ein erster IR-Sensor (42) stromabwärts des Laserscanners (50) und stromaufwärts eines Einlasses (18) in die interne Kammer (16) angeordnet ist, und wobei ein zweiter IR-Sensor (44) stromabwärts eines Auslasses (20) der internen Kammer (16) angeordnet ist;
- einen Sauerstoffsensor (48), montiert zum Erfassen von Sauerstoffgehalt in der internen Kammer (16); und
- eine Steuerung (52), den Förderer (22), den Laserscanner (50) und das Paar IR-Temperatursensoren (42, 44) miteinander verbindend zum automatischen Selbsteinstellen von Wärmeübertragung des Produkts (24) in der internen Kammer (16).

2. Gefriereinrichtung nach Anspruch 1, ferner umfassend einen Temperatursensor (46), montiert zum Erfassen einer Temperatur der internen Kammer (16).

3. Gefriereinrichtung nach Anspruch 1 oder 2, ferner umfassend ein Ventil (28), insbesondere ein Steuerventil, wirkverbunden mit dem kryogenen Zufuhrelement (26).

4. Gefriereinrichtung nach Anspruch 3, wobei das Ventil (28) dazu aufgebaut und angeordnet ist, eine Menge von kryogener Substanz (36) zu steuern oder zu beschränken, die durch das kryogene Zufuhrelement (26) in die interne Kammer (16) eingeführt wird.

5. Verfahren zum Frosten eines Produkts (24) in einer kryogenen Gefriereinrichtung (10) nach zumindest einem der Ansprüche 1 bis 4, das Folgendes umfasst:
- Erfassen (42, 44, 46, 48, 50) zumindest einer physikalischen Charakteristik des Produkts (24) in Echtzeit;
- Zuführen einer kryogenen Substanz (36) zum Produkt (24) für Wärmeübertragung am Produkt (24);
- automatisches Selbsteinstellen der Wärmeübertragung am Produkt (24) in Reaktion auf das Erfassen (42, 44, 46, 48, 50) der zumindest einen physikalischen Charakteristik; und
- kontinuierliches Selbsteinstellen der Wärmeübertragung, um das Produkt (24) auf eine ausgewählte Temperatur zu bringen.

6. Verfahren nach Anspruch 5, wobei das Erfassen (42, 44, 46, 48, 50) alle physikalischen Charakteristiken des Produkts (24) und eine Temperatur einer Atmosphäre in der kryogenen Gefriereinrichtung (10), der das Produkt (24) ausgesetzt ist, umfasst.

7. Verfahren nach Anspruch 5 oder 6, wobei das Erfassen (42, 44, 46, 48, 50) ferner Erfassen des Produkts (24) an einem Einlass (18) und einem Auslass (20) der kryogenen Gefriereinrichtung (10) umfasst.

8. Verfahren nach zumindest einem der Ansprüche 5 bis 7, wobei das Erfassen (42, 44, 46, 48, 50) ferner Erfassen einer Atmosphäre und Umwälzanordnung in der kryogenen Gefriereinrichtung (10) für kontinuierliches Selbsteinstellen der Wärmeübertragung umfasst.

9. Verfahren nach zumindest einem der Ansprüche 5 bis 8, wobei das Erfassen (42, 44, 46, 48, 50) Scannen (50) des Produkts (24) mit einem Laser an einem Einlass (18) der kryogenen Gefriereinrichtung (10) und ferner Erfassen einer Temperatur des Produkts (24) mit einem Infrarot-Temperatursensor (42, 44) an einem Einlass (18) und einem Auslass (20) der kryogenen Gefriereinrichtung (10) umfasst.

10. Verfahren nach Anspruch 9, ferner umfassend weiteres Selbsteinstellen der Wärmeübertragung in Abhängigkeit vom Scannen (50) und dem weiteren Erfassen.

11. Verfahren nach zumindest einem der Ansprüche 5 bis 10, ferner umfassend Überwachen des Sauerstoffgehalts in der kryogenen Gefriereinrichtung (10).

12. Verfahren nach zumindest einem der Ansprüche 5 bis 11, wobei die kryogene Substanz (36) aus der Gruppe ausgewählt wird, die aus Stickstoff, Flüssigstickstoff, Kohlendioxidschnee und einer Kombination daraus besteht.

13. Verfahren nach zumindest einem der Ansprüche 5 bis 12, ferner umfassend weiteres Erfassen des Beförderns (22) des Produkts (24) durch die kryogene Gefriereinrichtung (10) und/oder des Bereitstellens der kryogenen Substanz (36) zum kontinuierlichen Selbsteinstellen der Wärmeübertragung.

14. Verfahren nach zumindest einem der Ansprüche 5 bis 13, wobei das Produkt (24) zumindest ein Nahrungsmittelprodukt ist.

## Revendications

1. Congélateur cryogénique (10) pour un produit (24), en particulier pour un produit alimentaire comprenant :
- un boîtier (12) ayant une chambre interne (16) et un élément de distribution de cryogène (26) disposé à l'intérieur de ce dernier ;
- un convoyeur (22) pour transporter le produit (24) à travers la chambre interne (16) ;
- un scanner laser (50) disposé au niveau d'un orifice d'entrée (18) du boîtier (12) pour balayer une surface de section transversale du produit (24) entrant dans le congélateur cryogénique (10) ;
- une paire de capteurs de température infrarouge (IR) (42, 44), dans lequel un premier capteur IR (42) est disposé en aval du scanner laser (50) et en amont d'un orifice d'entrée (18) par rapport à ladite chambre interne (16), et un second capteur IR (44) est disposé en aval d'un orifice de sortie (20) de ladite chambre interne (16) ;
- un capteur d'oxygène (48) monté pour détecter une teneur en oxygène dans la chambre interne (16) ; et
- un dispositif de commande (52) interconnectant le convoyeur (22), le scanner laser (50) et la paire de capteurs de température IR (42, 44) pour auto-ajuster automatiquement un transfert de chaleur du produit (24) dans la chambre interne (16).

2. Congélateur cryogénique selon la revendication 1, comprenant en outre un capteur de température (46) monté pour détecter une température de la chambre interne (16).

3. Congélateur cryogénique selon la revendication 1 ou 2, comprenant en outre une vanne (28), en particulier une vanne de régulation, associée de manière fonctionnelle à l'élément de distribution de cryogène (26).

4. Congélateur cryogénique selon la revendication 3, dans lequel la vanne (28) est construite et conçue pour réguler ou restreindre une quantité de substance cryogène (36) introduite à travers l'élément de distribution de cryogène (26) dans la chambre interne (16).

5. Procédé pour congeler un produit (24) dans un congélateur cryogénique (10) selon au moins l'une des revendications 1 à 4, comprenant :
- la détection (42, 44, 46, 48, 50) d'au moins une caractéristique physique du produit (24) en temps réel ;
- la fourniture d'une substance cryogénique (36) au produit (24) pour un transfert de chaleur vers ledit produit (24) ;
- l'auto-ajustement automatique du transfert de chaleur vers le produit (24) à la suite de la détection (42, 44, 46, 48, 50) de la ou des caractéristiques physiques ; et
- l'auto-ajustement continu du transfert de chaleur pour amener le produit (24) à une température sélectionnée.

6. Procédé selon la revendication 5, dans lequel la détection (42, 44, 46, 48, 50) comprend toutes les caractéristiques physiques du produit (24) et une température d'une atmosphère dans le congélateur cryogénique (10) à laquelle le produit (24) est exposé.

7. Procédé selon la revendication 5 ou 6, dans lequel la détection (42, 44, 46, 48, 50) comprend la détection supplémentaire du produit (24) au niveau d'un orifice d'entrée (18) et d'un orifice de sortie (20) du congélateur cryogénique (10).

8. Procédé selon au moins l'une des revendications 5 à 7, dans lequel la détection (42, 44, 46, 48, 50) comprend la détection supplémentaire d'un ensemble atmosphère et circulation dans le congélateur cryogénique (10) pour l'auto-ajustement continu du transfert de chaleur.

9. Procédé selon au moins l'une des revendications 5 à 8, dans lequel la détection (42, 44, 46, 48, 50) comprend le balayage (50) du produit (24) avec un laser au niveau d'un orifice d'entrée (18) dudit congélateur cryogénique (10) et la détection supplémentaire d'une température du produit (24) avec un capteur de température infrarouge (42, 44) au niveau d'un orifice d'entrée (18) et d'un orifice de sortie (20) du congélateur cryogénique (10).

10. Procédé selon la revendication 9, comprenant en outre un auto-ajustement supplémentaire du transfert de chaleur en fonction du balayage (50) et de la détection supplémentaire.

11. Procédé selon au moins l'une des revendications 5 à 10, comprenant en outre la surveillance de la teneur en oxygène dans le congélateur cryogénique (10).

12. Procédé selon au moins l'une des revendications 5 à 11, dans lequel la substance cryogénique (36) est sélectionnée dans le groupe constitué par l'azote, l'azote liquide, la neige carbonique et une combinaison de ces derniers.

13. Procédé selon au moins l'une des revendications 5 à 12, comprenant en outre une détection supplémentaire du convoyeur (22) du produit (24) à travers le congélateur cryogénique (10) et/ou la fourniture de la substance cryogénique (36) pour l'auto-ajustement continu dudit transfert de chaleur.

14. Procédé selon au moins l'une des revendications 5 à 13, dans lequel le produit (24) est au moins un produit alimentaire.
